# EUROPÄISCHE PATENTSCHRIFT

(11) **EP 0 599 120 B1**
(45) Veröffentlichungstag und Bekanntmachung des Hinweises auf die Patenterteilung: **27.01.1999**
(21) Anmeldenummer: 93118047.5
(22) Anmeldetag: 08.11.1993
(51) Int. Cl.: H04L 25/20

(54) **Signalregenerator für Binärsignale**
Regenerator for binary signals
Régénérateur pour signaux binaires

(30) Priorität: 24.11.1992 DE 4239374
(43) Veröffentlichungstag der Anmeldung: 01.06.1994
(73) Patentinhaber: DEUTSCHE THOMSON-BRANDT GMBH, 78048 Villingen-Schwenningen (DE)
(72) Erfinder: Scholz, Werner, D-30989 Gehrden (DE)

(56) Entgegenhaltungen:
- EP-A- 0 073 400
- DE-A- 3 119 485
- NTZ NACHRICHTENTECHNISCHE ZEITSCHRIFT Bd. 30, Nr. 9 , September 1977 , BERLIN DE Seiten 712 - 717 HAUSER & HEIDNER 'Ein neuer Impulsregenerator mit quantisierter Rückkopplung für das PCM-Digitalverstärker-Hybridsystem für 560 Mbit/s'
- IEEE TRANSACTIONS ON CONSUMER ELECTRONICS Bd. 32, Nr. 4 , November 1986 , NEW YORK US Seiten 707 - 712 OHTAKE ET AL. 'Magnetic recording characteristics of R-DAT'

## Beschreibung

Die Erfindung geht aus von einem Signalregenerator gemäß dem Oberbegriff des Anspruchs 1.

Die Regenerierung eines von einer Übertragungsstrecke, insbesondere eines von einem Aufzeichnungsgerät gelieferten Binärsignals, erfolgt im allgemeinen in 3 Stufen:
1. Signalentzerrer
2. Amplitudenentscheider
3. Zeitenscheider.

Eine Entzerrungsschaltung, die das aufgezeichnete Binärsignal wiederherstellt (Full-Response-Entzerrer), ist z.B. aus IEEE Transactions, VOL CE-32, No. 4, Nov. 1986 S. 709, Fig. 7 bekannt. Der dort dargestellte Entzerrer besteht aus einem sogenannten Kosinusentzerrer und einem Integrator. Die Schaltung ist für Signale, die nicht nur gleichstromfrei sind, sondern auch möglichst wenig tieffrequente Spektralanteile enthalten, gut geeignet. Ein solches Signal ist z.B. der 8/10-Code für das R-DAT-System.

Für die digitale Videoaufzeichnung müssen redundanzärmere Codes verwendet werden, z.B. 8/9-Modulation oder 24/25-Modulation. Die mit dieser Modulation erzeugten Aufzeichnungssignale, die zusätzlich Spurführungsinformationen enthalten können, sind zwar gleichstromfrei, besitzen aber sehr ausgeprägte tieffrequente Spektralanteile. Hier ist die bekannte Entzerrungsmethode, bei der angestrebt wird, das ursprüngliche Binärsignal vor der Amplitudenentscheidung wiederherzustellen, nicht mehr empfehlenswert. Um die nötige Augenöffnung zu erreichen, müssen die tiefen Frequenzen sehr stark angehoben werden. Damit werden aber auch tieffrequente Störsignale verstärkt. Außerdem ist die Stabilität des Integrators bei zu großer Integrationszeitkonstante nicht mehr gewährleistet.

Um diese Schwierigkeiten zu vermeiden, wird die bisher beschriebene Entzerrungsmethode, die auch als Full-Response-Entzerrung bezeichnet wird, durch die Partial-Response-Entzerrung ersetzt.

Dabei erzeugt die Entzerrungsschaltung eine genau definierte Verzerrung. Da die Gesetzmäßigkeiten des auf diese Weise erzeugten Signals bekannt sind, ist mit Hilfe geeigneter Schaltungen das ursprüngliche Binärsignal wieder herstellbar. Für die Magnetbandübertragung hat sich die sogenannte Partial-Response-Class 4-Entzerrung PR4 in Verbindung mit einem Maximum Likelihood Detektor, meist von Viterbi-Typ, als besonders geeignet erwiesen. Das PR4-Signal ist ein ternäres Signal, bei dem die Pegelentscheidung nicht mehr mit einem einfachen Nulldurchgangsdetektor erfolgen kann. Um die Maximum Likelihood Detection vorzunehmen, muß das PR4-Signal mit einem A/D-Wandler abgetastet werden. Die auf diese Weise durchgeführte Regenerierung des Binärsignals erfordert gegenüber der Regenerierungsschaltung mit Full-Response-Entzerrung und Nulldurchgangsdetektor einen großen Mehraufwand.

Der Erfindung liegt die Aufgabe zugrunde, die Regenerierungsschaltung mit Full-Response-Entzerrung mit möglichst geringem Zusatzaufwand so zu verbessern, daß sie auch für redundanzarme Ubertragungscodes geeignet ist. Diese Aufgabe wird durch die im Anspruch 1 angegebene Erfindung gelöst. Vorteilhafte Weiterbildungen der Erfindung sind in den Unteransprüchen angegeben.

Die Lösung der Aufgabe geht aus von dem Prinzip der quantisierten Rückkopplung. Dabei wird das Eingangssignal als Hochpaßsignal über eine Additionsstufe auf den Pegelentscheider gegeben. Dem zweiten Eingang der Additionsstufe wird das Ausgangssignal des Pegelentscheiders oder des Zeitentscheiders über einen Tiefpaß zugeführt, der möglichst den komplementären Frequenzgang zum hochpaßartigen Ubertragungsweg des Eingangssignales besitzen soll. Damit werden die bei der Ubertragung verlorengegangenen tieffrequenten Signalanteile aus dem bereits von Störungen befreiten Signal ersetzt, so daß die Anhebung tieferfrequenter Störungen vermieden wird. In EP-A-0 073 400 wird das für die quantisierte Rückkopplung erforderliche komplementäre Tiefpaßsignal erzeugt, indem das über den Hochpaßweg übertragene Eingangssignal vom Ausgangssignal des Entscheiders subtrahiert wird.

Die Gemeinsamkeit zwischen der quantisierten Rückkopplung und der Erfindung besteht darin, daß ein Teil des von Störungen befreiten Signals hinter einem der Entscheider auf das Signal vor dem Amplitudenentscheider rückgekoppelt wird. Im Gegensatz zur quantisierten Rückkopplung wird allerdings bei der erfindungsgemäßen Schaltung der Gleichstromanteil des Signals nicht rückgekoppelt und damit auch nicht wieder hergestellt. Daher ist die erfindungsgemäße Schaltung vor allem für Signale geeignet, die zwar starke tieffrequente Spektralanteile enthalten, jedoch gleichstromfrei sind. Der Vorteil der erfindungsgemäßen Schaltung besteht darin, daß das bewährte Konzept der Full-Response-Entzerrung unter Verwendung eines Integrators nun auch bei Signalen mit starken tieffrequenten Spektralanteilen anwendbar ist. Die Integration kann so ausgeführt werden, daß die Anhebung tieferfrequenter Störungen noch nicht zu stark ist und eine gute Stabilität der Integrationsschaltung gewährleistet ist. Für den Rückkopplungshochpaß hat sich eine R-C-Reihenschaltung gut bewährt. Durch Einstellung der Zeitkonstante des R-C-Gliedes und der Rückführungsamplitude kann die Augenöffnung des Signals am Eingang des Pegelentscheiders optimiert werden. Das ist gleichbedeutend mit einer Minimierung der Bitfehlerrate des regenerierten Signals.

Der Aufwand für die erfindungsgemäße Schaltungsverbesserung besteht im einfachsten Fall aus einen Widerstand und einem Kondensator. Diese einfache Lösung ist angebracht, wenn nur mit geringen Änderungen der Eingangsamplitude zu rechnen ist. Sofern eine stärkere Schwankung der Eingangsamplitude zu erwarten ist, sollte die Rückkopplungsamplitude der jeweiligen Eingangsamplitude automatisch angepaßt werden. Da ein binäres Signal über den Hochpaß rückgekoppelt wird, kann die Amplitudeneinstellung des Rückkopplungssignals durch einen von der Amplitude des Eingangssignals gesteuerten Begrenzer erfolgen. Die für den Begrenzer erforderliche Steuerspannung wird durch Gleichrichtung aus dem Eingangssignal erzeugt. Damit bleibt der Vorteil der Amplitudenunabhängigkeit der Schaltung erhalten, die durch die Full-Response-Entzerrung in Verbindung mit dem Nulldurchgangsdetektor als Pegelentscheider gegeben ist.

Die Erfindung wird im folgenden anhand der Zeichnungen erläutert. Darin zeigen
- Fig. 1: eine bekannte Regenerierungsschaltung,
- Fig. 2: eine erfindungsgemäße Regenerierungsschaltung und
- Fig. 3: die Ausführung einer erfindungsgemäßen Regenerierungsschaltung.

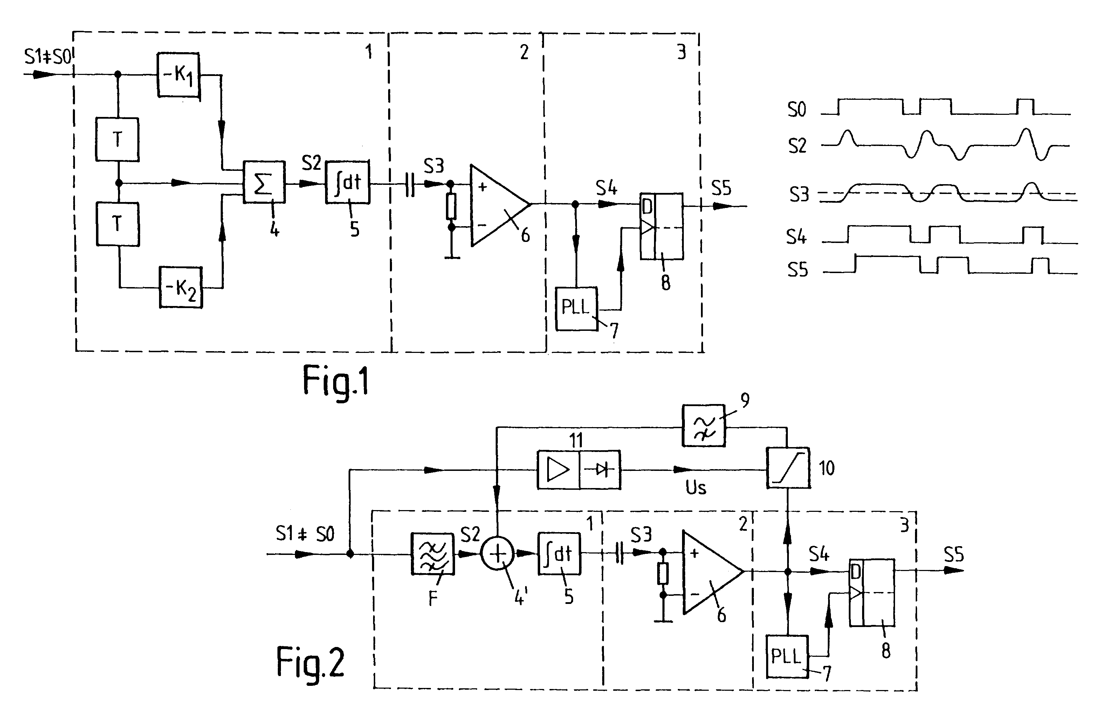

Fig. 1 zeigt eine bekannte Regenerierungsschaltung mit Full-Response-Entzerrer. Der Entzerrer 1 besteht aus einem sogenannten Kosinusentzerrer und einem Integrator 5. Im Kosinusentzerrer wird das Eingangssignal dreifach mit Laufzeitunterschieden von jeweils einer Bitdauer T den Eingängen einer Additionsstufe 4 zugeführt. Die Koeffizienten K1 und K2 sind so gewählt, daß das Ausgangssignal S2 der Additionsstufe 4 aus schmalen Impulsen besteht, die den Pegelübergängen des ursprünglichen Signals S0 entsprechen und möglichst weitgehend von Einflüssen der Nachbarimpulse befreit sind. Durch Integration wird aus den Impulsen S2 das Signal S3 gewonnen, das dem Pegelentscheider 2 zugeführt wird. Die Pegelentscheidung erfolgt hier mit einem als Nulldurchgangsdetektor geschalteten Komparator 6. Die Zeitentscheidung wird anschließend mit dem in einer PLL-Schaltung 7 wiederhergestellten Bittakt und einem D-Flip-Flop 8 im Zeitentscheider 3 durchgeführt.

Fig. 2 zeigt eine erfindungsgemäße Schaltung. Der Signalentzerrer 1 besteht aus Eingangsfilter F, Additionsstufe 4' und Integrator 5. Wenn das Eingangsfilter F ein Transversalfilter ist, kann die Additionsstufe 4' wie in Fig.1 Bestandteil dieses Filters sein. Dem zweiten Eingang der Additionsstufe 4' wird über den Hochpaß 9 das Ausgangssignal des Begrenzers 10 zugeführt. Die für den Begrenzer erforderliche Steuerspannung Us wird durch den Verstärker 11 mit nachgeschaltetem Gleichrichter erzeugt. Der Amplitudenentscheider 2 wird aus dem als Nulldurchgangsdetektor geschalteten Komparator 6 gebildet. Das Ausgangssignal des Amplitudenentscheiders 2 wird dem Zeitentscheider 3 zugeführt und außerdem über den steuerbaren Begrenzer 10 und den Hochpaß 9 auf den vor dem Integrator 5 liegenden Signalweg rückgekoppelt. Die Zeitentscheidung wird mit dem in einer PLL-Schaltung 7 wiederhergestellten Bittakt und einem D-Flip-Flop 8 im Zeitentscheider 3 durchgeführt.

Da ein binäres Signal über den Hochpaß 9 rückgekoppelt wird, kann die Amplitudeneinstellung des binären Signals durch einen von der Amplitude des Eingangssignals S1 gesteuerten Begrenzer 10 erfolgen. Bei stärkeren Schwankungen der Eingangsamplitude wird so die Rückkopplungsamplitude der jeweiligen Eingangsamplitude automatisch angepaßt. Damit bleibt der Vorteil der Amplitudenunabhängigkeit der Schaltung erhalten, die durch die Full-Response-Entzerrung in Verbindung mit dem Nulldurchgangsdetektor als Pegelentscheider gegeben ist.

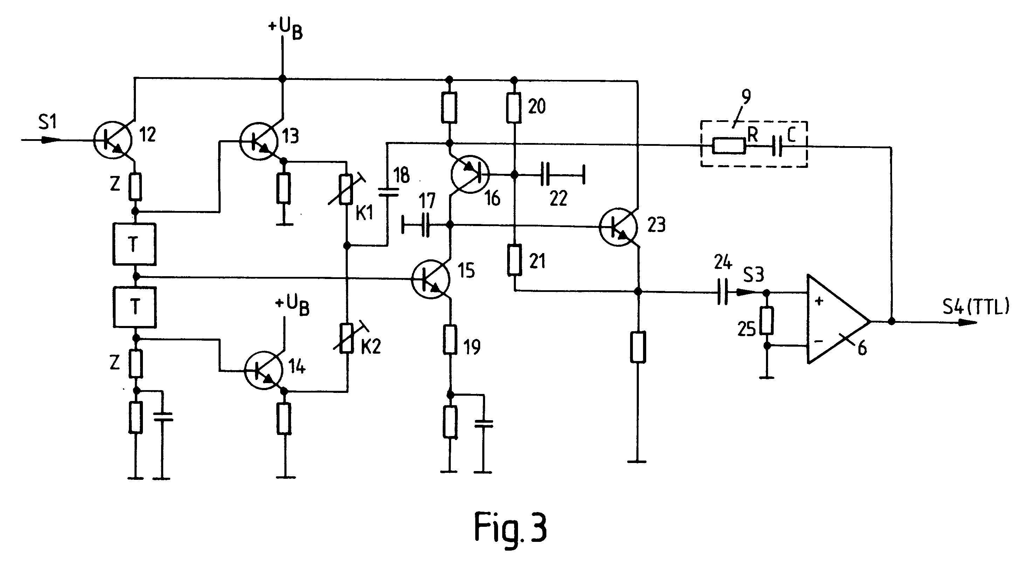

Fig. 3 zeigt ein ausführliches Schaltungsbeispiel für die Anwendung der beschriebenen Rückkopplung. Über den Emitterfolger 12 wird das Eingangssignal S1 zwei Laufzeitleitungen mit einer Laufzeit von je einer Bitdauer T zugeführt. Die Laufzeitstrecke ist am Eingang und Ausgang mit dem Wellenwiderstand Z der Laufzeitleitungen abgeschlossen. Von den drei Abgriffen der Laufzeitstrecke wird das Signal den hochohmigen Basiseingängen der Transistoren 13, 14, 15 zugeführt. Die Transistoren 13 und 14 sind als Emitterfolger geschaltet und dienen lediglich als Impedanzwandler. Die Transistoren 15 und 16 bilden gleichzeitig die Additionsstufe 4 und den Integrator 5. Die für die Signalentzerrung günstigsten Koeffizienten K1 und K2 sind unabhängig voneinander einstellbar, da die durch die Einstellwiderstände fließenden Signalströme über den Koppel kondensator 18 auf den niederohmigen Emittereingang des Transistors 16 gelangen. Die den Koeffizienten K1 und K2 entsprechenden Signalströme werden dem Integrationskondensator 17 ohne Polaritätsänderung zugeführt. Dabei dient der Kollektor des Transistors 16 als hochohmige Stromquelle. Der Signalstrom vom Mittelabgriff der Verzögerungsstrecke wird dem Kondensator 17 über den als hochohmige Stromquelle dienenden Transistor 15 mit Polaritätsumkehr zugeführt. Die Zusammenschaltung der Kollektoren von Transistor 15 und 16 ergibt zusammen mit dem Kondensator 17 einen nahezu idealen Integrator, der durch den Eingang des Emitterfolgers 23 nur geringfügig belastet ist. Zur Stabilisierung der Spannung an den Kollektoren der Transistoren 15 und 16 ist eine Gegenkopplung, die mit dem Spannungsteiler 20, 21 und dem Kondensator 22 ausgeführt ist, erforderlich. Die Zeitkonstante der Gegenkopplungsschaltung, die aus Stabilitätsgründen nicht zu groß sein darf, bestimmt, wie schnell die Amplitude des integrierten Signals S3 auf den mittleren Spannungswert abfällt. Bei Signalen mit ausgeprägten tieffrequenten Spektralanteilen, wird durch den Amplitudenabfall die Augenöffnung vermindert und somit die Störempfindlichkeit erhöht. Uber den erfindugsgemäßen Rückkopplungshochpaß 9 wird dem Integrator ein Strom zugeführt, der den Amplitudenabfall am Integrationspunkt 15, 16, 17 weitgehend kompensiert. Damit wird die Augenöffnung wirkungsvoll vergrößert, so daß sich Störsignale bei der Amplitudenentscheidung am Eingang des Nulldurchgangsdetektors entsprechend weniger auswirken können. Das Schaltungskonzept gemäß Fig. 1, das auch in Fig. 3 angewendet wird, ermöglicht es, die erfindungsbedingte Verbesserung der Signalentzerrung mit sehr geringem Zusatzaufwand zu realisieren, da die Additionsstufe 4 des Kosinusentzerres für die Zuführung des vom Entscheiderausgang über den Hochpaß 9 rückgekoppelten Signals ausgenutzt werden kann.

## Patentansprüche

1. Regenerator für Binärsignale, der einen aus einem Eingangsfilter (F) und einem Integrator (5) gebildeten Signalentzerrer (1), einen Amplitudenentscheider (2) und einen Zeitentscheider (3) enthält, **dadurch gekennzeichnet**, daß das Ausgangssignal (S4, S5) von einem der Entscheider (2, 3) über einen Hochpaß (9) auf den vor dem Integrator (5) liegenden Signalweg rückgekoppelt ist.

2. Regenerator nach Anspruch 1, **dadurch gekennzeichnet**, daß der Hochpaß (9) aus einer Reihenschaltung von Widerstand (R) und Kondensator (C) besteht.

3. Regenerator nach Anspruch 1 oder 2, **dadurch gekennzeichnet**, daß die Amplitude des über den Hochpaß (9) zugeführten Rückkoppelstromes automatisch der Amplitude des Eingangssignals (S1) angepaßt ist.

4. Regenerator nach einem der vorhergehenden Ansprüche, **dadurch gekennzeichnet**, daß der Signalentzerrer (1) vor dem Integrator (5) eine Schaltung mit einer Additionsstufe (4) enthält (Fig. 1) und daß das über den Hochpaß (9) rückgekoppelte Signal einem Eingang der Additionsstufe (4) zugeführt ist.

5. Regenerator nach Anspruch 1, **dadurch gekennzeichnet**, daß das Eingangsfilter (F) als Hochpaß ausgebildet ist.

## Claims

1. Regenerator for binary signals which comprises a signal equaliser (1) formed by an input filter (F) and an integrator (5), an amplitude detector (2) and a period detector (3), characterised in that, the output signal (S4, S5) is fed back from one of the detectors (2, 3) via a high pass filter (9) to the signal path located prior to the integrator (5).

2. Regenerator in accordance with Claim 1, characterised in that, the high pass filter (9) consists of a series circuit of a resistor (R) and a capacitor (C).

3. Regenerator in accordance with Claim 1 or 2, characterised in that, the amplitude of the feedback current supplied via the high pass filter (9) is automatically matched to the amplitude of the input signal (S1).

4. Regenerator in accordance with any of the preceding Claims, characterised in that, the signal equaliser (1) comprises a circuit having a summing stage (4) prior to the integrator (5) (Fig. 1) and that the signal fed back via the high pass filter (9) is supplied to an input of the summing stage (4).

5. Regenerator in accordance with Claim 1, characterised in that, the input filter (F) is formed as a high pass filter.

## Revendications

1. Régénérateur pour signaux binaires, qui comprend un correcteur de signal (1) formé d'un filtre d'entrée (F) et d'un intégrateur (5), un décideur d'amplitude (2) et un décideur de temps (3), **caractérisé en ce que** le signal de sortie (S4, S5) est réinjecté par un des décideurs (2, 3) via un passe-haut (9) sur le trajet du signal situé avant l'intégrateur (5).

2. Régénérateur d'après la revendication 1, **caractérisé en ce que** le passe-haut (9) se compose d'un circuit série de résistance R et condensateur (C).

3. Régénérateur d'après la revendication 1 ou 2, **caractérisé en ce que** l'amplitude du courant de rétroaction transmis via le passe-haut (9), est adaptée automatiquement à l'amplitude du signal d'entrée (S1).

4. Régénérateur d'après une des revendications précédentes, **caractérisé en ce que** le correcteur de signaux (1), avant l'intégrateur (5), comprend un circuit avec un étage d'addition (4) (Fig. 1) et que le signal réinjecté via le passe-haut (9) est transmis à une entrée de l'étage d'addition (4).

5. Régénérateur d'après la revendication 1, **caractérisé en ce que** le filtre d'entrée (F) est formé comme un passe-haut.
